# EUROPÄISCHE PATENTSCHRIFT

(11) **EP 1 814 209 B1**
(45) Veröffentlichungstag und Bekanntmachung des Hinweises auf die Patenterteilung: **20.08.2008**
(21) Anmeldenummer: 06025478.6
(22) Anmeldetag: 31.01.2006
(51) Int. Cl.: H02K 3/50, F16F 9/53

(54) **Schwingungsdämpfungssystem für Statorwicklungen**
Vibration damping system for stator windings
Système d'amortissement des vibrations pour enroulements statoriques

(43) Veröffentlichungstag der Anmeldung: 01.08.2007
(62) Teilanmeldung aus: 06002003.9
(73) Patentinhaber: SIEMENS AKTIENGESELLSCHAFT, 80333 München (DE)
(72) Erfinder: Beck, Ronald, Dr., 45475 Mülheim an der Ruhr (DE); Ehehalt, Ulrich, 45131 Essen (DE); Kowalski, Waldemar, 45472 Mülheim an der Ruhr (DE); Lehmann, Christoph, Dr., 47506 Neukirchen-Vluyn (DE); Richter, Christoph, Dr., 49477 Ibbenbüren (DE); Spiess, Karlheinz, 47445 Moers (DE)

(56) Entgegenhaltungen:
- DE-A1- 3 800 678
- US-A- 5 729 073
- US-A- 5 969 460

## Beschreibung

Die Erfindung betrifft ein Schwingungsdämpfungssystem für Statorwicklungen. Ein solches System ist beispielsweise aus der EP 0 950 279 B1 bekannt.

Das System nach der EP 0 950 279 B1 verfolgt den Ansatz, die Eigenfrequenz der Wicklungen eines Stators durch geeignete mechanische Belastung der an einer Wicklungsabstützungsstrebe gehaltenen Statorwicklungen auf ein ausreichend hohes Maß einzustellen. Zu diesem Zweck umfasst das Schwingungsdämpfungssystem einen zwischen der Wicklungsabstützungsstrebe und den Wicklungen angeordneten Schubblock sowie mehrere die Wicklungen belastende Federn.

In der US 5 729 073 wird ein System zur Regelung der Vibrationsfrequenz einer Statorwicklung offenbart.

Die US 5 969 460 offenbart eine elektrische Maschine mit einem Wickelkopf, welcher zum Auffangen dynamischer Belastungen verspannt gelagert ist.

Der Erfindung liegt die Aufgabe zugrunde, ein Schwingungsdämpfungssystem für Statorwicklungen, insbesondere für Statorwicklungen von Generatoren, anzugeben, welches besonders wirksam ist.

Diese Aufgabe wird erfindungsgemäß gelöst durch ein Schwingungsdämpfungssystem mit den Merkmalen des Anspruchs 1. Dieses für einen Generator sowie für einen Motor geeignete System umfasst eine Wicklung eines Stators, welche an einem Stützbauteil des Stators unter Zwischenschaltung eines Dämpfungselementes gehalten ist. Außerhalb des Stators, insbesondere außerhalb des Generators beziehungsweise des Motors, ist eine Steuervorrichtung angeordnet, die in Zusammenwirkung mit einem im Stator angeordneten Stellelement eine Änderung der Dämpfungseigenschaften des Stators ermöglicht. Das Stellelement kann ein Teil des Dämpfungselementes oder mit diesem identisch sein. Ebenso ist es auch möglich, das Stellelement außerhalb des Dämpfungselementes derart anzuordnen, dass es eine Veränderung der mechanischen Belastung der Statorwicklungen und damit deren Schwingungseigenschaften ermöglicht. Bei einer Betätigung des Stellelementes mittels der extern angeordneten Steuervorrichtung ändert sich nicht notwendigerweise die Geometrie des Stellelementes. Vielmehr wird unter einem Stellelement im vorliegenden Fall jegliches Element verstanden, das zur gezielten Änderung der Schwingungseigenschaften des Stators, insbesondere der Statorwicklungen, geeignet ist.

Mindestens ein Dämpfungselement, insbesondere mehrere auch als Tilger bezeichnete Dämpfungselemente, sind vorzugsweise am Wickelkopf des Stators angeordnet. Damit ist eine im Allgemeinen von der Drehzahl des Rotors abhängige Reduktion der Schwingungsamplituden des Wickelkopfes möglich. Um in jedem Drehzahlbereich der elektrischen Maschine eine besonders gute Dämpfung zu erreichen, sind die Schwingungseigenschaften der Tilger, insbesondere deren Eigenfrequenz, in Stufen oder kontinuierlich einstellbar. Mit einer automatischen Erfassung und Verarbeitung sowohl der Rotordrehzahl als auch der Schwingungen im Stator ist ein adaptives System realisierbar, welches durch geeignete Ansteuerung des Stellelementes als Teil des Dämpfungssystems selbsttätig die Statorschwingungen minimiert.

Das Stellelement weist ein piezoelektrisches Element als Aktor auf. Der den piezoelektrischen Effekt nutzende Aktor ist besonders zur Erzeugung hoher Kräfte geeignet. Darüber hinaus hat der Piezo-Aktor den Vorteil, dass er sehr schnelle Formänderungen ermöglicht. Damit kann der Belastungszustand einer Statorwicklung mittels des Aktors bedarfsgerecht mit einer Frequenz geändert werden, die der Frequenz der elektrischen Maschine, also des Generators oder des Motors, entspricht oder höher als die Drehzahl der elektrischen Maschine ist. Einzelne Piezo-Kristalle im Stellelement werden mit einer geeigneten Phasenverschiebung gegenüber den zu mindernden mechanischen Schwingungen des Stators angesteuert.

Auf besonders einfache Weise kann der piezoelektrische Effekt für Dämpfungszwecke genutzt werden, wenn die elektrischen Anschlüsse des Piezoelementes über einen Widerstand miteinander verbunden sind. Eine externe Ansteuerung des Piezoelementes, das heißt das Anlegen einer Spannung an das piezoelektrische Element, ist in diesem Fall nicht erforderlich. Die eine Formänderung des Piezoelementes bewirkende und damit eine Spannung erzeugende mechanische Energie wird im elektrischen Widerstand in Wärme umgesetzt. Vorzugsweise ist der Widerstand einstellbar. Hierdurch sind die Dämpfungseigenschaften des Stellelementes gezielt beeinflussbar, ohne das Stellelement von außen mit elektrischer Energie zu versorgen.

Unabhängig davon, ob das Piezoelement aktiv angesteuert ist, ist es in einem schlauchartigen Hohlkörper aus einem Isolierstoff angeordnet. Dieser schlauchartige, nachgiebige, bevorzugt mit einem Glasfasergewebe ummantelte Hohlkörper bildet in vorteilhafter Ausgestaltung ein energieverzehrendes Abstandselement zwischen benachbarten Ständerstäben des Stators. Durch den Einschluss der piezoelektrischen Kristalle in einem Hohlkörper ist auch eine Ganztränkung der Abstandselemente möglich.

Die der Erfindung zugrunde liegende Aufgabe wird ferner gelöst durch ein Schwingungsdämpfungssystem für Statorwicklungen, wobei an einem zumindest im wesentlichen rotationssymmetrischen Stützbauteil (3) eines Stators (1) mindestens ein schwingungsdämpfender Tilger (18) gehalten ist, welcher orthogonal zur Achse (A) des Stützbauteils (3) auslenkbar ist. Hierbei ist an einem zumindest im wesentlichen rotationssymmetrischen Stützbauteil eines Stators, insbesondere eines Wickelkopfes, mindestens ein schwingungsdämpfender Tilger gehalten, welcher orthogonal zur Achse des Stützbauteils auslenkbar ist. Vorzugsweise sind am Umfang des Stützbauteils mehrere Tilger befestigt, welche in bevorzugter Ausgestaltung adaptive Eigenschaften aufweisen. Dabei kommen in vorteilhafter Weise einzelne oder Kombinationen der vorstehend erläuterten Technologien der Schwingungsdämpfung, insbesondere die magneto- oder elektrorheologische Dämpfung sowie die piezoelektrische Dämpfung zum Einsatz.

In jedem der aufgeführten Schwingungsdämpfungssysteme sind besonders ausgeprägte schwingungstilgende Eigenschaften durch eine unsymmetrische Geometrie des Statorwicklungen tragenden Stützbauteils erzielbar. Eine Resonanzen des Stators entgegenwirkende Unsymmetrie kann beispielsweise durch Aussparungen und/oder Verstärkungen des Stützbauteils sowie durch die Art der Befestigung an einer Umgebungskonstruktion, insbesondere am Gehäuse des Stators, gegeben sein.

Der Vorteil der Erfindung liegt insbesondere darin, dass durch die bevorzugt von außen, auch während des laufenden Betriebes, einstellbare Unterdrückung von Vibrationen in einem Statorwickelkopf dessen mechanische Beanspruchung verringert und damit dessen Lebensdauer verlängert wird. Insbesondere wird die Bildung von Reibstaub vermieden sowie die Lösung des Wickelkopfverbandes des Stators verhindert.

Nachfolgend werden mehrere Ausführungsbeispiele der Erfindung anhand einer Zeichnung näher erläutert. Hierin zeigen jeweils in symbolisierter Darstellung:
- FIG 1: ausschnittsweise einen Stator mit einem Dämpfungselement mit verstellbaren Dämpfungseigenschaften,
- FIG 2: ein ein piezoelektrisches Stellelement aufweisendes Dämpfungselement für einen Stator,
- FIG 3 und 4: einen Stator mit einem Wickelkopf mit mehreren Tilgern,
- FIG 5 bis 8: ein Schwingungsdämpfungssystem mit piezoelektrischen Dämpfungselementen,
- FIG 9: eine Vorrichtung zur Dämpfung von Statorschwingungen mittels Partikelfüllung.

Einander entsprechende oder gleichwirkende Teile sind in allen Figuren mit den gleichen Bezugszeichen gekennzeichnet.

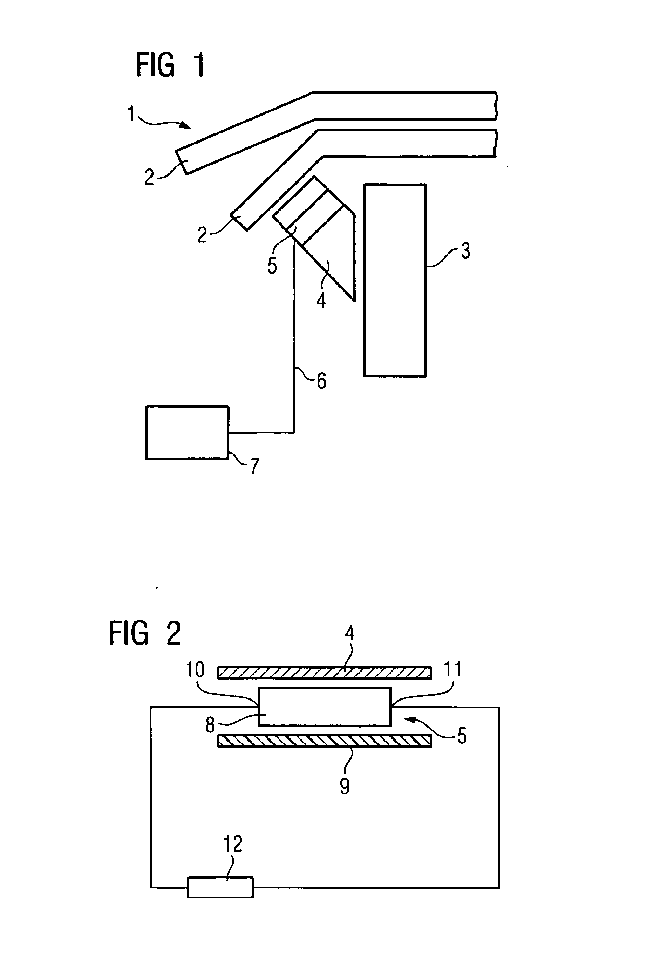

In FIG 1 ist grob schematisiert ein Ausschnitt aus einem Stator 1 eines Generators dargestellt. Hinsichtlich des prinzipiellen Aufbaus sowie der Funktion des Stators 1 wird auf die EP 0 950 279 B1 verwiesen. Eine Wicklung 2 ist auf einem Stützbauteil 3 unter Zwischenschaltung eines Dämpfungselementes 4 gehalten. Abweichend von der symbolisierten Darstellung sind die Teile 2,3,4 des Stators 1 kraftübertragend miteinander gekoppelt. In das Dämpfungselement 4 ist ein Stellelement 5 integriert, welches über eine Leitung 6 mit einer Steuervorrichtung 7 verbunden ist, die außerhalb des Generators angeordnet ist. An Stelle der Leitung 6 kann alternativ jegliche andere Form der Daten- und/oder Energieübertragung vorgesehen sein.

Das Stellelement 5 ist beispielsweise ein hydraulisches Stellglied, welches die mechanische Vorspannung des Dämpfungselementes 4 und damit die Eigenfrequenz der Wicklung 2 ändern kann. Hierbei ist die Eigenfrequenz umso höher, je höher die mittels des Dämpfungselementes 4 auf die Wicklung 2 aufgebrachte Kraft ist. Die Verstellung des Stellelementes 5 kann jederzeit, auch während des Betriebs des den Stator 1 aufweisenden Generators, erfolgen. Bevorzugt ist das Stellelement 5 kontinuierlich verstellbar. Es wird über die Steuervorrichtung 7 derart eingestellt, dass die Eigenfrequenz der Wicklung 2 ausreichend weit über der Frequenz der die Schwingung anregenden magnetischen Kraft liegt. Die Verstellung der Eigenschaften des Dämpfungselementes 4 kann manuell oder automatisch erfolgen. In jedem Fall ist ein adaptives System der Schwingungstilgung gegeben. Die Steifigkeit des im Stator eingebauten Dämpfungselementes 4 kann auch in diskreten Schritten verstellbar sein.

Zusätzlich zu einem hydraulischen Stellglied oder statt eines solchen Aktors weist das Stellelement 5 in vorteilhafter Ausgestaltung eine Füllung mit einem elektro- oder magnetorheologischen Fluid auf. Insbesondere in diesem Fall kann das Stellelement 5 mit dem Dämpfungselement 4 identisch sein.

Eine erfindungsgemäße Ausgestaltung wird im Folgenden anhand Figur 2 erläutert. Hierbei umfasst das in das Dämpfungselement 4 integrierte Stellelement 5 ein piezoelektrisches Element 8. Dieses ist in einem schlauchartigen Hohlkörper 9 aus Isolierstoff, beispielsweise einem flexiblen Kunststoffrohr oder einem Schlauch aus Glasfasergewebe, angeordnet. Die elektrischen Anschlüsse 10,11 des piezoelektrischen Elementes 8 sind über einen Widerstand 12 miteinander verbunden. Ändert sich aufgrund einer Schwingung in der Wicklung 2 die mechanische Belastung des Dämpfungselementes 4, so dass das piezoelektrische Element 8 komprimiert, expandiert oder in sonstiger Weise verformt wird, induziert dies eine elektrische Spannung zwischen den Anschlüssen 10,11 und damit einen Stromfluss durch den Widerstand 12. In nicht gezeigter Weise befindet sich innerhalb des Hohlkörpers 9 eine Vielzahl an piezoelektrischen Elementen 8.

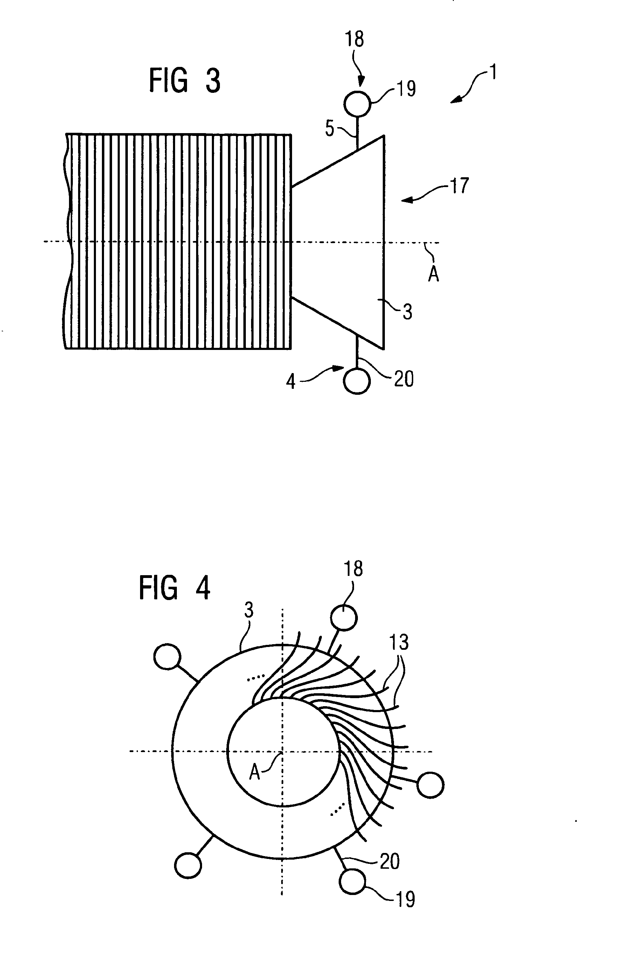

Ein weiteres System zur Schwingungsdämpfung in einem Stator einer elektrischen Maschine zeigen die Figuren 3 und 4 in einer Seiten- beziehungsweise Frontansicht. Am Umfang eines Stützbauteils 3 eines Wickelkopfes 17 des Stators 1 sind mehrere Tilger 18 befestigt. Jeder dieser Tilger 18 weist einen in der schematischen Darstellung als Kugel eingezeichneten Trägheitskörper 19 auf, der mittels eines nachgiebigen Dämpfungsstabes 20 am Stützbauteil 3, welches im wesentlichen rotationssymmetrisch zu einer Achse A ausgebildet ist, gehalten ist. Die Trägheitskörper 19 sind damit insbesondere orthogonal zur Achse A des Stützbauteils 3, jedoch auch in andere Raumrichtungen auslenkbar. Die Gesamtheit der Tilger 18 ist somit geeignet, jeglicher Form anregender Schwingungen, die insbesondere auf die zwischen Rotor und Stator 1 wirkenden elektromagnetischen Kräfte zurückzuführen sind, entgegenzuwirken.

In nicht in den Figuren 3 und 4 ersichtlicher Weise handelt es sich bei den Trägheitskörpern 19 bevorzugt um adaptive Dämpfer, deren Eigenschaften mittels der Steuervorrichtung 7 (FIG 1) veränderbar sind.

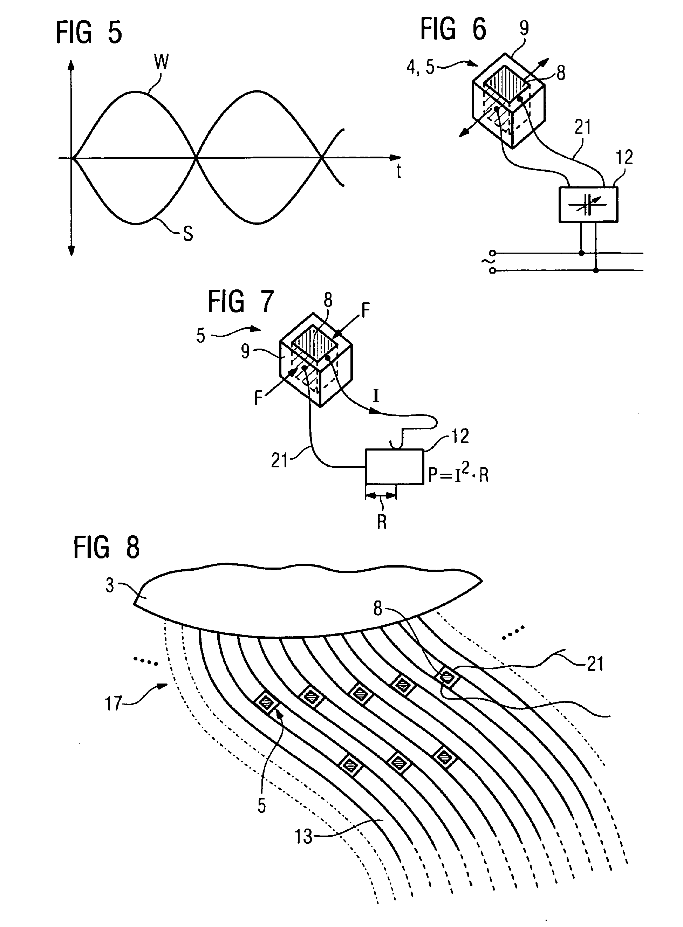

Die Figuren 5 bis 8 nehmen Bezug auf die Figur 2, die ebenfalls ein piezoelektrisches Schwingungsdämpfungssystem betrifft. In Figur 5 ist in einem Diagramm in idealisierter Weise eine durch elektromagnetische Kräfte angeregte Schwingung W eines Ständerstabs 13 des Wickelkopfes 17 (vgl. FIG 4) sowie eine um 180° phasenversetzte, ebenso sinusförmige Schwingung S eines piezoelektrischen Elementes 8 dargestellt. Die Anschlüsse 10, 11 des piezoelektrischen Elementes 8 sind, wie aus den Figuren 6 und 7 ersichtlich, über Anschlussleitungen 21 an einen veränderbaren elektrischen Widerstand 12 angeschlossen. Der Hohlkörper 9, in dem sich das piezoelektrische Element 8 befindet, hat die Form eines Kubus, welcher durch Kräfte F beaufschlagt wird, die zwischen den in Figur 8 sichtbaren Ständerstäben 13 wirken. Somit fungiert das das piezoelektrische Element 8 aufweisende Stellelement 5 als energieverzehrendes Abstandselement zwischen den Ständerstäben 13 des Stators 1.

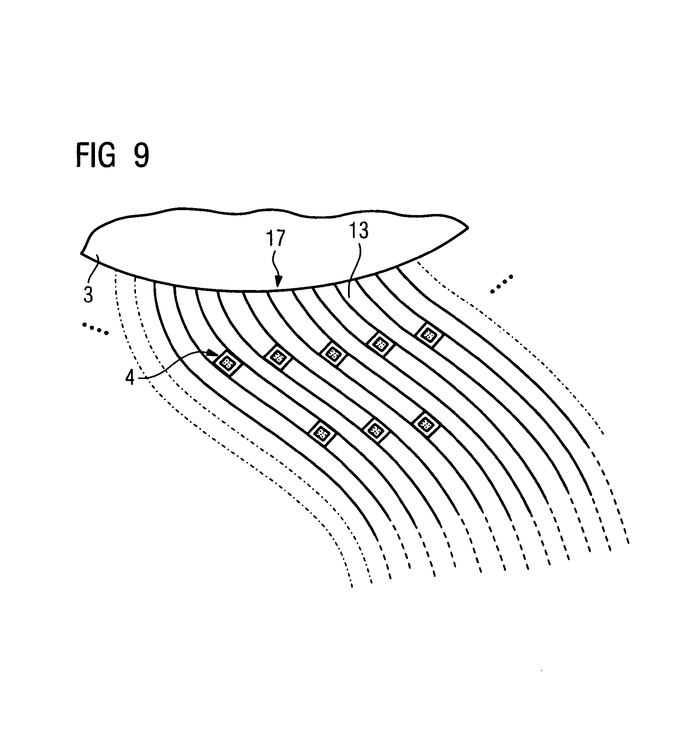

Im Ausführungsbeispiel nach der Figur 9 weisen die Dämpfungselemente 4, ähnlich wie im Ausführungsbeispiel nach den Figuren 5 bis 8, eine kubische Form auf. Abweichend von dieser Darstellung sind beispielsweise auch zylindrische Formen der Hohlkörper 9 möglich.

## Patentansprüche

1. Schwingungsdämpfungssystem für Statorwicklungen, wobei eine Wicklung (2) eines Stators (1) an einem Stützbauteil (3) des Stators (1) unter Zwischenschaltung eines Dämpfungselementes (4) gehalten ist, umfassend eine außerhalb des Stators (1) angeordnete Steuervorrichtung (7), welche in Zusammenwirkung mit einem im Stator (1) angeordneten Stellelement (5) eine Änderung der Dämpfungseigenschaften des Stators (1) ermöglicht,
**dadurch gekennzeichnet, dass**
das Stellelement (5) ein piezoelektrisches Element (8) als Aktor aufweist, welches in einem schlauchartigen Hohlkörper (9) aus Isolierstoff angeordnet ist.

2. Schwingungsdämpfungssystem nach Anspruch 1,
**dadurch gekennzeichnet, dass**
elektrische Anschlüsse (10,11) des piezoelektrischen Elementes (8) über einen Widerstand (12) miteinander verbunden sind.

## Claims

1. Oscillation damping system for stator windings, in which a winding (2) of a stator (1) is held on a supporting component (3) of the stator (1) with the interposition of a damping element (4), comprising a control apparatus (7) which is arranged outside the stator (1) and, by interaction with an actuating element (5) arranged in the stator (1), makes it possible to vary the damping characteristics of the stator (1), **characterized in that** the actuating element (5) has a piezoelectric element (8) as the actuator, which is arranged in a hollow body (9) in the form of a flexible tube and composed of insulating material.

2. Oscillation damping system according to Claim 1, **characterized in that** electrical connections (10, 11) of the piezoelectric element (8) are connected to one another via a resistor (12).

## Revendications

1. Système d'amortissement des vibrations pour des enroulements statoriques, dans lequel un enroulement ( 2 ) d'un stator ( 1 ) est maintenu sur un élément ( 3 ) d'appui du stator ( 1 ) avec interposition d'un élément ( 4 ) d'amortissement, comprenant un dispositif ( 7 ) de commande qui est disposé à l'extérieur du stator ( 1 ) et qui, en coopération avec un élément ( 5 ) de réglage disposé dans le stator ( 1 ), rend possible une modification des propriétés d'amortissement du stator ( 1 ),
**caractérisé en ce que**
l'élément ( 5 ) de réglage comporte un élément ( 8 ) piézoélectrique comme actionneur, qui est disposé dans un corps ( 9 ) creux en forme de tube souple.

2. Système d'amortissement des vibrations suivant la revendication 1,
**caractérisé en ce que**
des bornes ( 10, 11 ) électriques de l'élément ( 8 ) piézoélectrique sont reliées entre elles par une résistance ( 12 ) .
